# EUROPÄISCHE PATENTSCHRIFT

(11) **EP 1 480 887 B1**
(45) Veröffentlichungstag und Bekanntmachung des Hinweises auf die Patenterteilung: **06.05.2009**
(21) Anmeldenummer: 03743356.2
(22) Anmeldetag: 28.02.2003
(51) Int. Cl.: B65D 6/18, B65D 6/26

(54) **BEHÄLTER, INSBESONDERE MEHRWEGEBEHÄLTER, MIT KLAPPBAREN SEITENWÄNDEN**
CONTAINER, ESPECIALLY REUSABLE CONTAINER, COMPRISING COLLAPSIBLE LATERAL WALLS
RECEPTACLE, EN PARTICULIER RECEPTACLE RETOURNABLE, POURVU DE PAROIS LATERALES RABATTABLES

(30) Priorität: 01.03.2002 DE 10208846
(43) Veröffentlichungstag der Anmeldung: 01.12.2004
(73) Patentinhaber: IFCO Systems GmbH, 82049 Pullach (DE)
(72) Erfinder: BARTH, Christian, 82049 Pullach (DE); KELLERER, Richard, 85622 Feldkirchen (DE)
(74) Vertreter: Schoppe, Fritz
(86) Internationale Anmeldenummer: PCT/EP2003/002076
(87) Internationale Veröffentlichungsnummer: WO 2003/074376

(56) Entgegenhaltungen:
- EP-A- 1 060 999
- WO-A-96/11144
- WO-A-97/29964

## Beschreibung

Die Erfindung betrifft einen Behälter, insbesondere Mehrwegebehälter aus Kunststoff gemäß dem Oberbegriff des Anspruches 1.

Ein solcher Behälter ist z.B. aus WO 97/29964 bekannt.

Mehrwegebehälter sind zumeist mit klappbaren Seitenwänden ausgerüstet, so dass der leere Behälter unter entsprechender Volumenverringerung mit auf den Boden heruntergeklappten Seitenwänden transportiert werden kann. Üblicherweise sind derartige Seitenwände über Gelenkscharniere oder Filmscharniere am Kastenboden angelenkt. In aufgerichteter Stellung sind die Seitenwände untereinander verriegelt, was üblicherweise durch Rastverschlusselemente erfolgt. Hierzu weisen die über Eck benachbarten Seitenwände entsprechende Rasthaken bzw. Rastnasen auf, die in aufgerichteter Stellung der Seitenwände ineinander greifen und die Wände miteinander verriegeln. Die bislang bekannten Konstruktionen haben aber zumeist den Nachteil, dass eine Entriegelung des Kastens bzw. Behälters nur sehr schwer möglich ist und zumeist die einzelnen Rastverschlusselemente gesondert manuell gelöst werden müssen, was sehr aufwendig ist und ein schlechtes Handling des Behälters zur Folge hat. Dies beeinträchtigt die markttechnische Akzeptanz derartiger Behälter. Hinzu kommt, dass derartige Behälter zumeist von ungeübten Personen bedient werden müssen, die dann, wenn sich der Behälter nicht einfach entriegeln lässt, häufig Gewalt anwenden, so dass sehr schnell die Rastverschlüsse zerstört werden.

Aufgabe der Erfindung ist es, einen für einen Mehrwegebehälter geeigneten Rastverschluss, insbesondere im Bereich der Behälterecken zu schaffen, welcher eine einfache und schnelle Entriegelung auch durch ungeübtes Personal ermöglicht, aber auch in der aufgerichteten Stellung der Seitenwände eine zuverlässige und stabile Verriegelung gewährleistet.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen angegebenen Merkmale gekennzeichnet sind.

Nach Maßgabe der Erfindung ist bei eckbezogener Betrachtung am Rand einer Seitenwand ein Druckhebel angelenkt bzw. gelagert, der manuell betätigt werden kann. Dieser Druckhebel weist an seinem dem Griffteil gegenüber liegendem Ende eine vorspringende Zunge auf, die sowohl als Rasthaken ausgebildet ist, aber auch als Auslöskante, wobei der Rasthaken in aufgerichteter Stellung mit einem Haken einer Rastnase der über Eck benachbarten Seitenwand zusammenwirkt. Diese im wesentlichen zungenartig ausgebildete Rastnase weist einen nach innen, also in das Behälterinnere vorspringenden Rastvorsprung auf, der vorzugsweise als Rastleiste ausgebildet ist. In weiterer zweckmäßiger Ausbildung schließt sich dieser Rastvorsprung an einer von der Seitenwandinnenfläche schräg nach innen in das Behälterinnere zu verlaufende Auflauframpe an, wobei hinter dem Rastvorsprung ein zurückgesetzter Abschnitt vorgesehen ist, der an seinem freien Ende als Rasthaken ausgebildet ist. Sowohl Druckhebel wie auch zungenartige Rastnase sind in ihrer federndelastischen Eigenschaft aufeinander abgestimmt. Der Druckhebel wird durch Drücken betätigt, so dass der Griffteil des Druckhebels nach innen gedrückt wird, wodurch es zu einem Verschwenken des anderen Endes des Druckhebels im Endbereich der Zunge kommt, so dass die dort angeordnete Auslöskante die zungenartige Rastnase nach außen drückt und damit die Seitenwand nach innen auf den Boden zugeklappt werden kann. Hierbei ist die zungenartige Rastnase derart elastisch federnd ausgebildet, dass sie beim Zurückdrücken eine federnde Rückstellkraft aufbaut, so dass dann, wenn die Seitenwand nach unten geklappt ist, die Rastnase wieder in ihre ursprüngliche, d. h. nach innen vorspringende Stellung des Rastvorsprungs zurückkehrt.

Wird die Seitenwand aufgerichtet, so läuft der am freien Ende der Zunge des Griffteils ausgebildete Rasthaken an der rampenartigen Auflaufschräge auf und drückt hierdurch wiederum die Rastnase nach außen, die aber dann wieder nach innen schnappt, sobald sich die Seitenwand mit dem Druckhebel in aufgerichteter Stellung befindet. Dadurch erfolgt die Verriegelung, die aber wiederum sehr einfach durch entsprechende Betätigung des Druckhebels entriegelt werden kann. Ein weiterer Vorteil dieses Rastverschlusses besteht darin, dass der Druckhebel automatisch auch von einer ungeübten Person infolge seiner Form und Ausbildung als Auslösemechanismus für die Entriegelung des Mehrwegebehälters bzw. dessen Seitenwände verstanden wird. In einfacher Weise und durchaus automatisch wird hierbei der Behälter an den beiden Eckbereichen mit den beiden Händen gegriffen und drücken die Daumen auf den Druckhebel, wodurch die Entriegelung erfolgt. Gleichzeitig kann durch Drücken der Seitenwand nach innen die Seitenwand in einer Bewegung mit der Auslösung der Entriegelung auf den Boden geklappt werden. Auch die Verriegelung erfolgt in einfacher Weise durch bloßes Aufldappen der Seitenwände, wodurch es selbständig zu einer Wandverrastung kommt.

Die Erfindung zeichnet sich dadurch aus, dass die Auslösung der Verriegelung, das heißt die Aufhebung der Verriegelung zum Zwecke des Einklappens der Seitenwände sehr leicht erfolgt, hingegen die Zuhaltekraft, also die Verriegelungskraft sehr hoch ist bzw. hoch eingestellt werden kann. Hierzu ist zweckmäßiger Weise die Rastnase im Bereich der vorderen Stirnkante hinterschnitten ausgebildet und zwar vorzugsweise mit einer schräg nach hinten springenden Stirnkante, aber wobei der Winkel gegenüber der Horizontalen je nach Stärke der gewünschten Verriegelungskraft entsprechend schräg gestellt sein kann. Bevorzugt liegt der Hinterschneidungswinkel in einem Bereich von 3 bis 20°, insbesondere bevorzugt 5 bis 15°.

Die federndelastische und aufeinander abgestimmte Eigenschaft sowohl von Druckhebel wie auch der Rastnase lassen sich durch die Dicke von Griffteil und Zunge bzw. zungenartiger Rastnase sowie der Hebellänge, dem Anlenkpunkt und der Breite von Druckhebel und zungenartiger Rastnase bestimmen.

Nachfolgend werden bevorzugte Ausführungsbeispiele der Erfindung anhand der Zeichnung beschrieben. Darin zeigen in rein schematischer Darstellung und jeweils auch nur in Teilansicht
- Figur 1: eine Seitenansicht des Eckbereichs eines Mehrwegebehälters aus Kunststoff zur Darstellung des Rastverschlusses,
- Figur 2: eine perspektivische Ansicht des in Figur 1 dargestellten Eckbereichs zur Darstellung der Längsseitenwand und der schmalen Seitenwand des Behälters,
- Figur 3: eine Schnittansicht längs Linie B-B in Figur 1,
- Figur 4: eine Seitenansicht des in Figur 1 dargestellten Eckbereichs eines Mehrwegebehälters und zwar gesehen von der schmalen Seitenwand her,
- Figur 5: eine Ansicht des in Figur 4 dargestellten Eckbereichs von unten, also von der Unterseite des Mehrwegebehälters her,
- Figur 6: eine Draufsicht des in Figur 4 dargestellten Eckbereichs,
- Figur 7: eine Schnittansicht längs der Linie A-A von Figur 4,
- Figur 8: eine Seitenansicht nur der Längswand des Eckbereichs nach Figur 4,
- Figur 9: eine perspektivische Ansicht eines Teils eines Eckbereichs eines Mehrwegebehälters einer weiteren Ausführungsform, wobei die Seitenwände des Mehrwegebehälters nur mit einem kleinen Abschnitt dargestellt sind,
- Figur 10: eine Seitenansicht des in Figur 9 dargestellten Rastverschlusses
- Figur 11: eine Schnittansicht längs der Linie A-A in Figur 10, sowie
- Figur 12: eine vergrößerte Darstellung einer mit Kreis gekennzeichneten Einzelheit in Fig. 11.

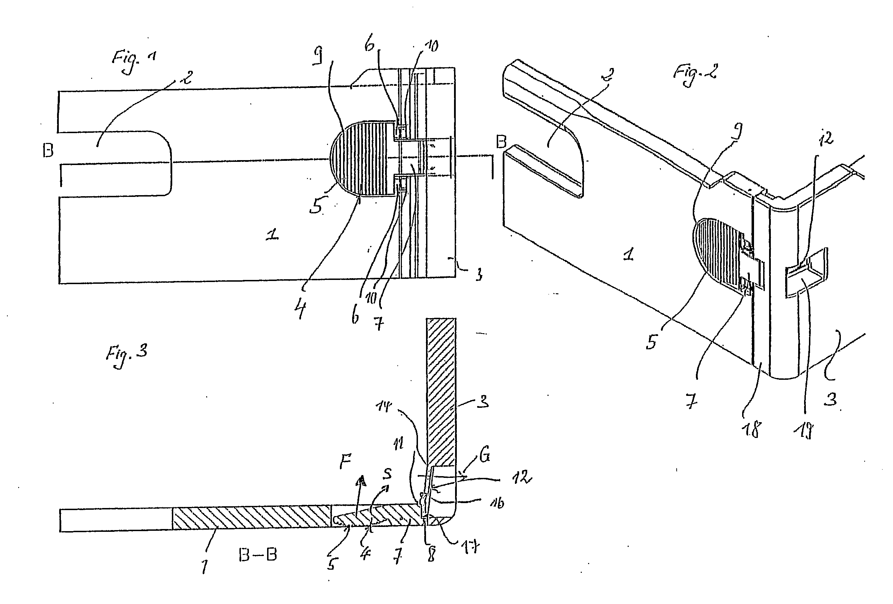

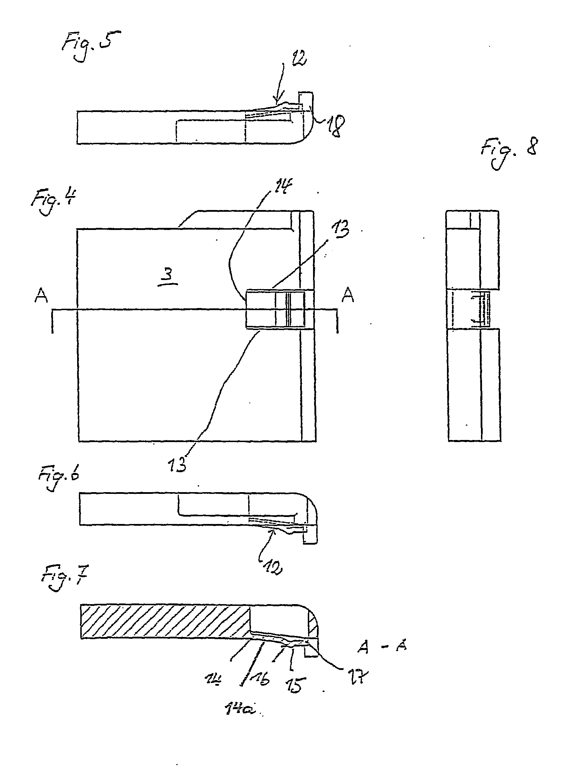

Figur 1 zeigt die Seitenansicht des Eckbereichs eines Mehrwegebehälters aus Kunststoff, wobei mit 1 die schmale Seitenwand bezeichnet ist, die nur teilweise zeichnerisch dargestellt ist. Mit 2 ist eine Grifföffnung der Seitenwand 1 bezeichnet, wohingegen die über Eck anschließende Längsseitenwand mit 3 bezeichnet ist. Die Seitenwand 1 ist Teil eines Mehrwegebehälters, der üblicherweise aus einem Boden, hier nicht dargestellt, und vier daran klappbar angeordneten Seitenwänden aufgebaut ist, wobei in der dargestellten Ausführungsform mit 1 die schmale und mit 3 die lange Seitenwand bezeichnet ist. Die Seitenwände sind einander gegenüberliegend angeordnet und - was aus der schematischen Darstellung nicht ersichtlich ist - in Richtung auf den Boden klappbar, wobei zuerst die einander gegenüberliegenden schmalen Seitenwände 1 nach innen in Richtung auf den Boden und danach die einander gegenüberliegenden Längsseitenwände 3 in Richtung auf den Boden klappbar sind, so dass die schmalen Seitenwände auf dem Boden liegen und die Längsseitenwände auf den nach innen geklappten schmalen Seitenwänden. In der aus den Figuren 1 bis 3 ersichtlichen aufgerichteten Stellung der Seitenwände, in denen der Behälter warenaufnahmebereit ist, sind die Seitenwände im Eckbereich miteinander verriegelt bzw. verrastet. Hierzu sind an den schmalen Seitenwänden jeweils im Eckbereich bzw. an den beiden Rändern Druckhebel 4 angeordnet bzw. ausgebildet. Der aus Figur 1 ersichtliche Druckhebel 4 weist einen Griff- oder Drückteil 5 auf, welcher zum Betätigen, d. h. zum Entriegeln zweier benachbarter Seitenwände dient. Über dieses Griffteil 5 setzt man die Hand, beispielsweise den Daumen auf, um den Druckhebel 4, wie im folgenden noch näher beschrieben wird, nach innen zu drücken. Der Druckhebel 4 ist mit der Seitenwand im dargestellten Ausführungsbeispiel einstückig über zwei beabstandete Stege oder Rippen 6 verbunden und weist ferner eine den Griffteil 5 in Richtung Eckbereich fortsetzende Zunge 7 auf, an deren Ende, wie Figur 3 ausweist, ein mit 8 bezeichneter Rasthaken vorsteht. Infolge der Anbindung über mindestens zwei Stege 6 ist der Griffteil 5 sozusagen frei in einer Aussparung bzw. Öffnung 9 der Seitenwand aufgenommen, welche im wesentlichen komplementär zum äußeren Rand des Griffteils 5 ausgebildet ist, jedoch einen freien Spalt 9 gegenüber dem Griffteil 5 aufweist. Infolge dieser freien Anordnung des Griffteils 5 innerhalb der Öffnung 9 und infolge der stegartigen Anbindung des Druckhebels an der Seitenwand 1 lässt sich der Griffteil 5 in Pfeilrichtung F nach innen drücken, wodurch der Druckhebel um den Anlenkpunkt der beiden Stege 6 an der Seitenwand 1 nach innen dreht, wie es durch die Schwenkrichtung S in Figur 3 ausgewiesen ist. Der Anlenkpunkt der Stege 6 ist hierbei mit 10 angedeutet (Figur 1). Dadurch drückt die Zunge 7 mit ihrer Vorderkante 11 auf eine zungenartige und mit 12 bezeichnete Rastnase, die in der Längsseitenwand 3 ausgebildet ist (Figur 3). Diese zungenartige Rastnase 12, die im Detail insbesondere auch aus den Figuren 4 und 7 ersichtlich ist, weist beidseitig einen freien Spalt 13 bezüglich der Längsseitenwand 3 auf und ist im dargestellten Ausführungsbeispiel bei 14 einstückig mit der Längsseitenwand 3 verbunden. 14 dient hierbei als Gelenkpunkt, um den die sich zum Eckbereich hin fortsetzende zungenartige Rastnase 12 aus der in Figur 3 dargestellten Stellung in Pfeilrichtung G nach außen gedrückt werden kann.

Die zungenartige Rastnase 12 weist, wie Figur 3 und Figur 7 zeigt, eine nach innen verlaufende, insbesondere schräg verlaufende Schulter 14a auf, die in einer Rastleiste 15 ausmündet, wobei das vordere freie Ende der Rastnase 12 gegenüber dieser Rastleiste 15 nach außen hin rückspringt. Wesentlich ist, dass diese zungenartige und frei innerhalb der Seitenwand nach vorne vorspringende Rastnase 12 sozusagen federnd elastisch ist und um den Anlenkpunkt 14, d. h. die Verbindung mit der Seitenwand 3 in Pfeilrichtung G drückbar ist, jedoch dann, wenn der Druck aufgehoben wird, wieder nach innen zurückfedert und zwar in die in Figur 3 dargestellte Stellung, in welcher die Rastleiste 15 nach innen hin bezüglich des Mehrwegebehälters vorsteht. Der Grad der Elastizität bzw. der Federwirkung wird im wesentlichen durch die Dicke, Breite der Rastnase 12 und/oder die Ausbildung des Anlenkpunktes 14 bestimmt. Die federnde Rastnase 12 ist hierbei in ihrer Federwirkung vorzugsweise so eingestellt sein, dass sie sich sozusagen auch von Hand in Richtung G nach außen, wenngleich mit gewissem Druck, drücken lässt. Dadurch lässt sich durch geeignete Bemessung der Rastnase 12 die federnde Eigenschaft bzw. Elastizität bestimmen und festlegen.

Dadurch ergibt sich ein sehr vorteilhaftes Zusammenwirken zwischen Druckhebel und zungenartiger Rastnase 12. Soll der Mehrwegebehälter mit seinen aufgerichteten Seitenwänden zusammengeklappt werden, dann wird der Mehrwegebehälter an den beiden Eckbereichen, also links und rechts der schmalen Seitenwand, mit dem Handballen gegriffen und drückt beispielsweise der Daumen auf den Griffteil 5, so dass der Druckhebel in Richtung F gedrückt und dadurch entsprechend Pfeilrichtung S nach innen geschwenkt wird. Dadurch drückt die Vorderkante 11 des Druckhebels auf die Rastnase 12 und zwar im dargestellten Ausführungsbeispiel unmittelbar hinter der vorspringenden Rastleiste 15, so dass die Rastnase 12 nach außen in Pfeilrichtung G gedrückt wird und damit der Weg für das Einklappen der Seitenwand 1 freigegeben wird. Ist die Seitenwand 1 in Richtung auf den Boden geklappt, federt die Rastnase 12 wieder in ihre Ursprungsstellung und kann die Seitenwand 3 ohne weiteres nach innen in Richtung auf den Boden geklappt werden und liegt dann auf der schmalen Seitenwand 1 auf Für das Aufrichten des Mehrwegebehälters werden zuerst die beiden Längsseitenwände 3 nach oben gerichtet bzw. geklappt und es werden dann die beiden gegenüber liegenden schmalen Seitenwände 1 nach oben geklappt, wobei die Rasthaken 8 auf die zungenartigen Rastnasen 12 auflaufen und infolge des Auflaufens auf die Schrägen 16 wird dann die federnd elastische Rastnase 12 um den Anlenkpunkt 14 in Pfeilrichtung G gedrückt, bis der Rasthaken 8 hinter das freie und hakenartige Ende 17 der Rastnase 12 einschnappt bzw. eingreift, wobei die Rastnase 12 entsprechend nach innen federt, also in Gegenrichtung zur Pfeilrichtung G. Dadurch ist die Raststellung erreicht, wie sie in Figur 3 dargestellt ist. Die Entriegelung und die Verriegelung erfolgt in einfacher Weise manuell und zwar quasi durch eine automatische Handbewegung mit dem Zusammelegen bzw. Zusammenklappen des Kastens bzw. dem Aufrichten der Seitenwände ohne dass noch gesonderte Vorkehrungen getroffen werden müssen. Es ist also ein sehr schnelles und eilifaches Entriegeln und Verriegeln möglich, was durch das Zusammenwirken der mit der Auflaufschräge 16 und der Rastnase 11 nach innen vorspringenden Rastnasen 12 mit dem federnd angelenkten Druckhebel hier möglich ist, wobei entsprechend die Rastnase 12 in Pfeilrichtung G verdrängt wird und infolge ihres Rückstellvermögens dann immer wieder in ihre Ausgangsposition bzw. Ruhestellung gemäß Figur 3 federt und einen sicheren und stabilen Rastverbund mit dem Haken des Druckhebels eingeht. Anders als bei konventionellen Kästen, wo vergleichbare Rasthaken bzw. Rastnasen in den Längsseitenwänden steif bzw. im wesentlichen starr sind und das Entriegeln sehr schwer wird, weil jeweils die einzelnen Rasthaken mit hohem Druck weggebogen werden müssen, was zu einer Zerstörung des Rastmechanismus führen kann, ist es nach Maßgabe der Erfindung in einfacher Weise möglich den Entriegelungs- und Verriegelungsvorgang vorzunehmen. Der Druckhebel wirkt somit quasi als Gebrauchsanweisung für die Entriegelungsbewegung, weil man automatisch versucht ist, mit dem Daumen beim Eindrücken der Seitenwand 1 auf das Griffteil 5 zu drücken, wodurch das Verschwenken der Entriegelungsmechanismus durch Eindrücken bzw. Ausdrücken der Rastnase 12 in Pfeilrichtung G iniziiert wird.

Es versteht sich von selbst, dass durch die geeignete Ausbildung von Anschlagleisten am umgreifenden Eckfalz 18 der Längsseitenwand 3 die aufgerichtete schmale Seitenwand 1 in ihrer aufrechten Position gehalten wird, also nicht über die aufrechte Stellung hinaus nach außen gedrückt werden kann. Derartige Anschlagleisten sind aber konventionell, so dass sie hier zur vereinfachten Darstellung weder zeichnerisch dargestellt noch beschrieben werden müssen. Aus Figur 2 ist die Öffnung 19 ersichtlich, innerhalb der die freie vorstehende Rastnase 12 ausgebildet ist. Wahlweise zur dargestellten einstückigen Ausbildung sowohl des Druckhebels wie auch der Rastnase 12 können diese aber auch als gesonderte Bauteile ausgebildet und dann durch Aufklipsen, Aufstecken oder dergleichen an den entsprechenden Seitenwänden 1 bzw. 3 befestigt werden. Insbesondere ist es auch zweckmäßig, wenn diese Bauteile mit einer anderen Farbe versehen werden, was die Signalwirkung als Entriegelungselement noch erhöht.

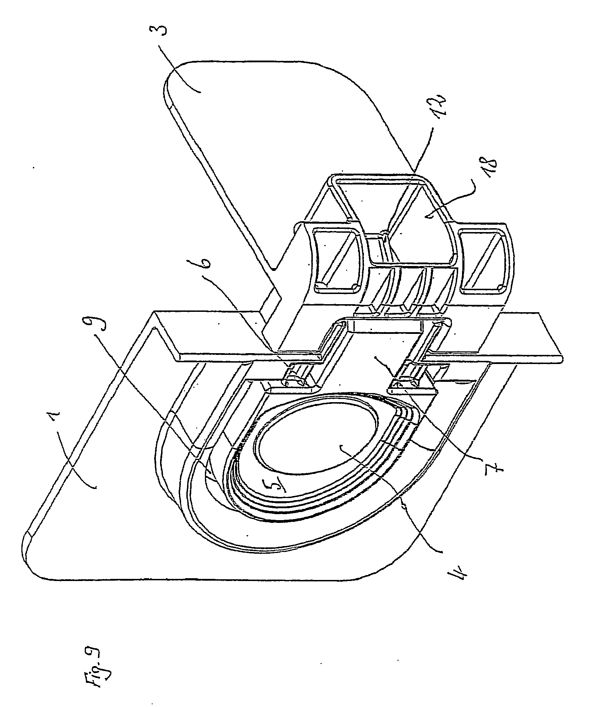

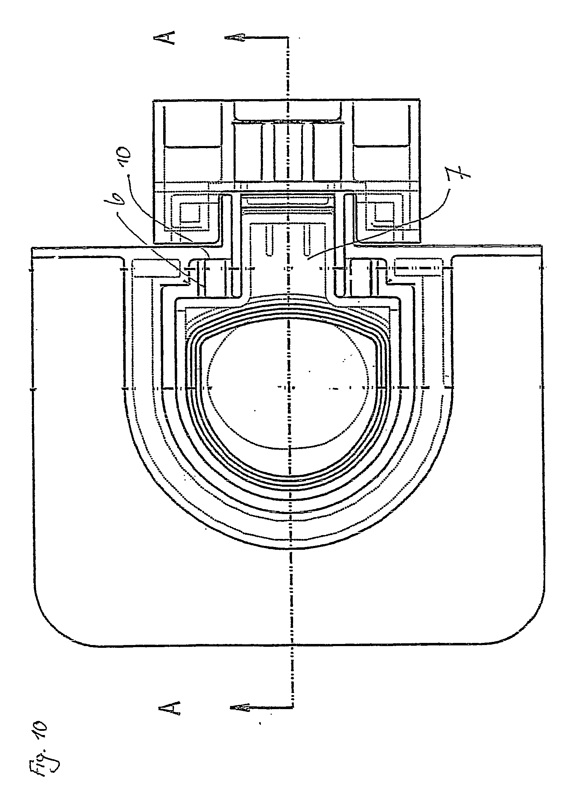

In den Figuren 9 bis 11 ist eine weitere Ausführungsform eines vergleichbaren Rastverschlusses dargestellt, wobei hier die Seitenwände 1 und 3 nur abschnittsweise dargestellt sind. Hierbei sind für die gleichen Bauteile die gleichen Bezugszeichen verwendet worden. Aus Figur 9 geht sehr augenscheinlich die einstückige Anbindung des Druckhebels 4 hervor, und zwar über die schmalen Leisten bzw. Stege 6, die, wie Figur 9 ausweist, als leichtes U-Profil ausgebildet sein können. Anstelle der U-förmigen Ausbildung können jedoch auch zwei rippenartige eng beabstandete Stege oder auch mehrere Stege vorgesehen sein.

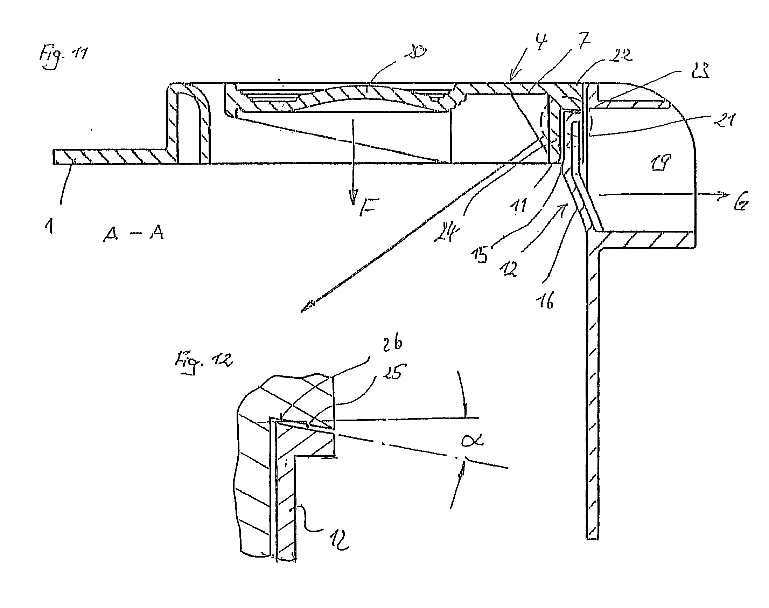

Insbesondere Figur 11 zeigt recht deutlich in der Querschnittsansicht den Aufbau des Druckhebels 4 und der Rastnase 12. In der Darstellung nach Figur 11 weist der Druckhebel 4 als Griffteil eine leichte Erhebung bzw. Wölbung 20 auf, an welcher der Daumen bei der Betätigung der Seitenwand zur Entriegelung ansetzen wird. Die Vorderkante 11 ist als Auslöselement für die Entriegelung hier am freien Ende einer rechtwinklig von der Zunge 7 nach innen in das Innere des Behälters vorstehenden Stegs 24 ausgebildet, so dass das Auslöselement als Hebel auf die Rastnase 12 wirkt und diese mit leichter Eindrückbetätigung des Druckhebels 4 in Pfeilrichtung G gedrückt wird, so dass die Seitenwand 1 an der insoweit ausgelenkten Rastnase vorbei nach innen geklappt werden kann. Infolge der Hebelübersetzung kann dies mit leichter Kraft erfolgen. Durch die Vorderkante 11 wird demnach entsprechend beim Eindrücken des Druckhebels 4 in Richtung F gegen den gegenüber der Rastleiste 15 rückspringenden Teil der Rastnase 12, hier mit 21 bezeichnet, gedrückt, so dass die zungenartige Rastnase 12 in Richtung G nach außen gedrückt wird und zwar in Richtung der Öffnung 19. Dadurch kann die Seitenwand 1 nach innen in Pfeilrichtung F in Richtung auf den Boden geklappt werden. Beim Aufrichten der Seitenwand 1 läuft der Druckhebel mit seiner gegenüberliegenden Kante 22 auf die Schrägfläche 16 der Rastnase 12 auf, die rampenartig vorsteht, so dass die Rastnase 12 wiederum in die Öffnung 19 gedrückt wird und die Seitenwand 1 aufgerichtet werden kann. Sobald die Vorderkante 22 die Rastnase 12 überlaufen hat, federt die Rastnase 12 wieder nach innen und zwar in Gegenrichtung zur Pfeilrichtung G, so dass die Verrastung durch Eingriff zwischen den Rasthaken 22 und dem am freien Ende der zungenartigen Rastnase 12 ausgebildeten Rasthaken erfolgt. Durch geeignete Einstellung der Dicke, des Anlenkpunkts, der Länge der Zungen und des Druckhebels kann die Entriegelungskraft und auch die federelastische Eigenschaft bestimmt werden, wobei die Verhältnisse innerhalb des Rastverbunds so aufeinander abgestimmt sind, dass insbesondere die Rastnasen 12 bevorzugt so elastisch federnd vorspringend ausgebildet sind, dass sie sich auch manuell leicht aber noch mit ausreichend Widerstand in die Öffnung 19 drücken lassen und ein ausreichendes Rückstellvermögen besitzen, so dass sie wieder in die in Figur 11 dargestellte Stellung in eine stabile Verriegelungslage vorspringt.

Die Höhe der Zuhaltekraft bzw. Verriegelungskraft kann gemäß der in Fig. 12 dargestellten Ausführungsform, die eine vergrößerte Darstellung der mit gestricheltem Kreis in Fig. 11 gekennzeichneten Einzelheit darstellt, dadurch eingestellt werden, dass die mit 25 bezeichnete vordere Stirnkante der Rastnase 12 hinterschnitten ausgebildet ist, wobei die Hinterschneidung durch eine Schrägstellung der Stirnkante 25 erzielt ist. Im dargestellten Ausführungsbeispiel beträgt der Winkel α der Hinterschneidung 12° und kann insbesondere im Winkelbereich von 3 bis 20°, bevorzugt 5 bis 15° liegen. Entsprechend ist auch die gegenüberliegende Sperrkante 26 ausgebildet und zwar komplementär mit der Stirnkante 25, das heißt unter einem entsprechenden Winkel. Durch diese Ausbildung wird die Auslösung, das heißt die Entriegelung nicht beeinträchtigt, vielmehr kann mit Betätigung des Druckhebels die Rastnase leicht in Richtung der Öffnung 19 verschwenkt werden, so dass eine leichte Entriegelung möglich ist. Allerdings ist die Zuhaltekraft in Folge der hinterschnittenen Kante sehr hoch, so dass ein unabsichtliches Öffnen ohne Druckhebelbetätigung nicht möglich ist.

## Patentansprüche

1. Behälter, insbesondere Mehrwegebehälter mit einem Behälterboden und darin angelenkten, in Richtung auf den Behälterboden klappbaren Seitenwänden, die für Transport und Lagerung in Leerstellung auf den Behälterboden zuklappbar und in aufgerichteter Stellung miteinander verrastbar sind, wobei die Rasten auf einer Seitenwand jeweils durch einen in Richtung auf den Behälterboden klappbaren Druckhebel (4) gebildet sind, der einen Rasthaken (22) aufweist, der in aufgerichteter Stellung der Seitenwände einen Rasthaken (17, 23) einer Rastnase (12) an der über Eck benachbarten Seitenwand zur Verrastung der Seitenwände übergreift, **dadurch gekennzeichnet, dass** die Rastnase in der Seitenwand derart elastisch federnd gelagert oder ausgebildet ist und mit einem Rastvorsprung nach innen über die innere Seitenwandfläche vorsteht, dass die Rastnase (12) mit Verschwenken des Druckhebels (4) unter Aufbau einer federnden Rückstellkraft nach außen gedrückt wird.

2. Behälter nach Anspruch 1, **dadurch gekennzeichnet, dass** der Druckhebel (4) in Fortsetzung des Griffteils (5) eine Zunge (7) aufweist, deren Innenkante (11) als Auslöskante an einem gegenüber dem vorzugsweise durch eine Rastleiste (15) gebildeten Rastvorsprung der Rastnase (12) zurückspringenden Teil (21) anliegt und als Auslöseteil zum Ausrücken (Pfeilrichtung G) der Rastnase vorgesehen ist.

3. Behälter nach Anspruch 1 oder 2, **dadurch gekennzeichnet, dass** die zungenartigen Rastnasen jeweils eine schräg nach innen verlaufende Auflauframpe (16) aufweisen.

4. Behälter nach Anspruch 3, **dadurch gekennzeichnet, dass** an der Auflauframpe (16) bzw. Schrägfläche (16) die Rastleiste (15) bzw. der Rastvorsprung anschließt.

5. Behälter nach einem der vorhergehenden Ansprüche, **dadurch gekennzeichnet, dass** die Rastnase (12) an ihrem freien Ende einen gegenüber der Rastleiste (15) bzw. dem Rastvorsprung zurückgesetzten Abschnitt (21) aufweist.

6. Behälter nach einem der vorhergehenden Ansprüche, **dadurch gekennzeichnet, dass** das freie Ende der Rastnase (12) als Haken (23) ausgebildet ist.

7. Behälter nach einem der vorhergehenden Ansprüche, **dadurch gekennzeichnet, dass** die Rastnase (12) in Art einer federnden Zunge in einer Öffnung (19) der Seitenwand (3) sitzt und mit ihren Rändern beidseitig vorzugsweise einen schmalen Spalt (13) mit der Seitenwand (3) begrenzt.

8. Behälter nach Anspruch 7, **dadurch gekennzeichnet, dass** die Rastnase (12) in ihrer federndelastischen Eigenschaft durch die Länge der Zunge, die Dicke der Zunge, die Breite der Zunge und/oder die Dicke des Anlenkpunkts (14) der Zunge an der Seitenwand bestimmt ist.

9. Behälter nach einem der vorhergehenden Ansprüche, **dadurch gekennzeichnet, dass** die Federkraft der Rastnase (12) mit dem Druckhebel (4) abgestimmt ist, derart, dass mit manuellem Drücken des Druckhebels (4) und dessen Verschwenkung die Rastnase (12) zur Entriegelung des Rastverschlusses nach außen (Pfeilrichtung G) gedrückt wird.

10. Behälter nach einem der vorhergehenden Ansprüche, **dadurch gekennzeichnet, dass** der Druckhebel (4) durch zwei schmale Stege an der Seitenwand (1) angelenkt ist.

11. Behälter nach Anspruch 10, **dadurch gekennzeichnet, dass** sich zwischen den schmalen Stegen (6) die Zunge (7) des Druckhebels erstreckt.

12. Behälter nach einem der Ansprüche 10 oder 11, **dadurch gekennzeichnet, dass** der Anlenkpunkt (14) der Stege an der Seitenwand den Dreh- und Schwenkpunkt des Druckhebels (4) bildet.

13. Behälter nach einem der vorhergehenden Ansprüche, **dadurch gekennzeichnet, dass** der Druckhebel (4) mit einem gewölbten Griffteil (20) bzw. Druckteil ausgebildet ist.

14. Behälter nach Anspruch 2, **dadurch gekennzeichnet, dass** die Auslöskante (11) für das Wegdrücken der Rastnase (12) gegenüber dem Griffteil (5) und die den Griffteil fortsetzende Zunge (7) nach innen vorspringend angeordnet ist (Hebelwirkung).

15. Behälter nach einem der Ansprüche 2 oder 14, **dadurch gekennzeichnet, dass** die Auslöskante (11) durch das freie Ende eines vorzugsweise im wesentlichen rechtwinklig vorspringenden Stegs (24) gebildet ist (Hebelwirkung).

16. Behälter nach einem der Ansprüche 2 oder 14 oder 15, **dadurch gekennzeichnet, dass** das freie Ende der Zunge (7) des Druckhebels (4) als Rasthaken bzw. Rastnase ausgebildet ist, die den Rasthaken (23) der Rastnase (12) in aufgerichteter Stellung der Seitenwände hintergreift.

17. Behälter nach einem der vorhergehenden Ansprüche, **dadurch gekennzeichnet, dass** die vordere Stirnkante der Rastnase für den Riegeleingriff mit der vorstehenden Kante (22) des Druckhebels (4) mit einer Hinterschneidung (25) ausgebildet ist.

18. Behälter nach Anspruch 17, **dadurch gekennzeichnet, dass** die vordere Stirnkante (25) der Rastnase (12) unter einem Winkel α von 3 bis 20°, vorzugsweise 5 bis 15° hinterschnitten ist, und dass die Gegenkante des Druckhebels für die Verriegelung mit einer komplementären Schrägfläche (26) ausgebildet ist.

## Claims

1. Container, in particular a reusable container comprising a container bottom and sidewalls that are attached thereto in an articulated manner and can be folded down in the direction of the container bottom, and which can be folded down on the container bottom for transport and storage when the container is empty and locked to each other when they are in the upright position, wherein the interlock devices on one sidewall are respectively formed by a pressure lever (4) that can be folded down in a direction towards the container bottom, the pressure lever comprising a locking hook (22) that, when the sidewalls are in an upright position, overlaps with a locking hook (17, 23) of a locking catch (12) on the sidewall adjacent at an angle in order to interlock the sidewalls, **characterized in that** the locking catch in the sidewall is elastically spring mounted or implemented in the sidewall and protrudes inwards with a locking protuberance beyond the interior sidewall surface, such that the locking catch (12) is pressed outwards due to a rotation of the pressure lever (4) thus building up an elastic return force.

2. Container according to claim 1, **characterized in that** the pressure lever (4) comprises a tongue (7) as a continuation of the gripping part (5) whose inner edge (11) is connected, as a releasing edge, to a portion (21) leaping back with respect to the locking protuberance of the locking catch (12) preferably formed by a locking strip (15) and is provided as a releasing portion for disconnecting (arrow direction G) the locking catch.

3. Container according to claim 1 or 2, **characterized in that** the tongue-like locking catches respectively comprise a lead-in ramp (16) that runs obliquely inwards.

4. Container according to claim 3, **characterized in that** the lead-in ramp (16) or bevel surface (16), respectively, connects with the locking strip (15) or the locking protuberance, respectively.

5. Container according to one of the preceding claims, **characterized in that** the locking catch (12) is provided at its free end with a portion (21) that is set back with respect to the locking strip (15) or the locking protuberance, respectively, at its free end.

6. Container according to one of the preceding claims, **characterized in that** the free end of the locking catch (12) is formed as a hook (23).

7. Container according to one of the preceding claims, **characterized in that** the locking catch (12) is seated within an opening (19) of the sidewall (3) in the manner of a resilient tongue and preferably delimits a narrow slot (13) on both sides with its edges with the sidewall (3).

8. Container according to claim 7, **characterized in that** the locking catch (12) has its spring-like elastic characteristic determined by the length of the tongue, the thickness of the tongue, the width of the tongue, and/or the thickness of the articulation point (14) of the tongue at the sidewall.

9. Container according to one of the preceding claims, **characterized in that** the spring force of the locking catch (12) is matched with the pressure lever (4) in such a manner that when the pressure lever (4) is manually pressed and rotated, the locking catch (12) will be pressed outward (arrow direction G) to release the interlock.

10. Container according to one of the preceding claims, **characterized in that** the pressure lever (4) is joined to the sidewall (1) in an articulated manner by means of two narrow webs.

11. Container according to claim 10, **characterized in that** the tongue (7) of the pressure lever extends between the narrow webs (6).

12. Container according to one of claims 10 or 11, **characterized in that** the articulation point (14) of the webs at the sidewall forms the point of rotation and slewing of the pressure lever (4).

13. Container according to one of the preceding claims, **characterized in that** the pressure lever (4) is formed with a dome-shaped gripping part (12) and/or pressing part.

14. Container according to claim 2, **characterized in that** the release edge (11) for pressing away the locking nose (12) is arranged opposite to the gripping part (5) and the tongue (7) continuing the gripping part protruding inwardly (leverage).

15. Container according to one of claims 2 or 14, **characterized in that** the releasing edge (11) is formed by the free end of a web (24) that projects preferably in a substantially orthogonal direction (leverage).

16. Container according to one of claims 2 or 14 or 15, **characterized in that** the free end of the tongue (7) of the pressure lever (4) is implemented as a locking hook or locking catch, respectively, that engages the locking hook (23) of the locking catch (12) in an upright position of the sidewalls.

17. Container according to one of the preceding claims, **characterized in that** the front edge of the locking catch is designed with an undercut (25) for interlocking with the protruding edge (22) of the pressure lever (4).

18. Container according to claim 17, **characterized in that** the front edge (25) of the locking catch (12) is undercut at an angle α of 3 to 20°, preferably 5 to 15° and that the opposite edge of the pressure lever is implemented for locking with a complementary bevel surface (26).

## Revendications

1. Réceptacle, en particulier réceptacle retournable avec un fond de réceptacle et des parois latérales y fixées de manière articulée, rabattables en direction du fond de réceptacle, qui peuvent être totalement rabattues sur le fond de réceptacle pour le transport et le stockage à vide et qui peuvent être encliquetées l'une dans l'autre en position redressée, les crans d'arrêt sur une paroi latérale étant formés, chacun, par un levier de pression (4) rabattable en direction du fond de réceptacle et qui présente un crochet d'encliquetage (22) qui vient en prise, en position redressée des parois latérales, par-dessus un crochet d'encliquetage (17, 23) d'un nez d'encliquetage (12) sur la paroi latérale adjacente d'angle, pour l'encliquetage des parois latérales, **caractérisé par le fait que** le nez d'encliquetage est monté ou réalisé de manière élastique dans la paroi latérale et ressort par une saillie d'encliquetage vers l'intérieur de la surface de paroi latérale intérieure de sorte que le nez d'encliquetage (12) soit poussé vers l'extérieur lors du pivotement du levier de pression (4) avec création d'une force de rappel élastique.

2. Réceptacle selon la revendication 1, **caractérisé par le fait que** le levier de pression (4) présente, en prolongement de l'élément de saisie (5), une languette (7) dont le bord intérieur (11) s'appuie comme bord de déclenchement sur un élément rebondissant (21) face à la saillie d'encliquetage du nez d'encliquetage (12) formée de préférence par une moulure d'encliquetage (15) et est prévu comme élément de déclenchement pour le dégagement (direction de la flèche G) du nez d'encliquetage.

3. Réceptacle selon la revendication 1 ou 2, **caractérisé par le fait que** les nez d'encliquetage en forme de languette présentent, chacun, une rampe de montée (16) s'étendant obliquement vers l'intérieur.

4. Réceptacle selon la revendication 3, **caractérisé par le fait qu'**à la rampe de montée (16) ou face oblique (16) se raccorde la moulure d'encliquetage (15) ou la saillie d'encliquetage.

5. Réceptacle selon l'une des revendications précédentes, **caractérisé par le fait que** le nez d'encliquetage (12) présente, à son extrémité libre, un segment (21) en retrait par rapport à la moulure d'encliquetage (15) ou à la saillie d'encliquetage

6. Réceptacle selon l'une des revendications précédentes, **caractérisé par le fait que** l'extrémité libre du nez d'encliquetage (12) se présente sous forme de crochet (23).

7. Réceptacle selon l'une des revendications précédentes, **caractérisé par le fait que** le nez d'encliquetage (12) se trouve à la manière d'une languette élastique dans une ouverture (19) de la paroi latérale (3) et délimite par ses bords des deux côtés, de préférence, un interstice étroit (13) avec la paroi latérale (3).

8. Réceptacle selon la revendication 7, **caractérisé par le fait que** le nez d'encliquetage (12) est déterminé, quant à sa propriété élastique, par la longueur de la languette, l'épaisseur de la languette, la largeur de la languette et/ou l'épaisseur du point d'articulation (14) de la languette à la paroi latérale.

9. Réceptacle selon l'une des revendications précédentes, **caractérisé par le fait que** la force de ressort du nez d'encliquetage (12) est accordée sur le levier de pression (4), de sorte que par une pression manuelle sur le levier de pression (4) et le pivotement de celui-ci le nez d'encliquetage (12) est poussé vers l'extérieur (direction de la flèche G) pour déverrouiller la fermeture par encliquetage.

10. Réceptacle selon l'une des revendications précédentes, **caractérisé par le fait que** le levier de pression (4) est connecté de manière articulée par deux bretelles étroites à la paroi latérale (1).

11. Réceptacle selon la revendication 10, **caractérisé par le fait qu'**entre les bretelles étroites (6) s'étend la languette (7) du levier de pression.

12. Réceptacle selon l'une des revendications 10 ou 11, **caractérisé par le fait que** le point d'articulation (14) des bretelles constitue à la paroi latérale le point de rotation et de pivotement du levier de pression (4).

13. Réceptacle selon l'une des revendications précédentes, **caractérisé par le fait que** le levier de pression (4) est réalisé avec un élément de saisie (20) ou élément de pression bombé.

14. Réceptacle selon la revendication 2, **caractérisé par le fait que** le bord de déclenchement (11) pour le repoussage du nez d'encliquetage (12) est disposé en saillie vers l'intérieur par rapport à l'élément de saisie (5) et la languette (7) prolongeant l'élément de saisie (effet de levier).

15. Réceptacle selon l'une des revendications 2 ou 14, **caractérisé par le fait que** le bord de déclenchement (11) est constitué par l'extrémité libre d'une bretelle (24) faisant saillie, de préférence, sensiblement à angle droit (effet de levier).

16. Réceptacle selon l'une des revendications 2 ou 14 ou 15, **caractérisé par le fait que** l'extrémité libre de la languette (7) du levier de pression (4) se présente sous forme de crochet d'encliquetage ou nez d'encliquetage qui vient en prise par derrière le crochet d'encliquetage (23) du nez d'encliquetage (12) en position redressée des parois latérales.

17. Réceptacle selon l'une des revendications précédentes, **caractérisé par le fait que** le bord frontal avant du nez d'encliquetage pour la venue en prise de verrouillage avec le bord précédent (22) du levier de poussée (4) est réalisé avec une contre-dépouille (25).

18. Réceptacle selon la revendication 17, **caractérisé par le fait que** le bord frontal avant (25) du nez d'encliquetage (12) est à contre-dépouille selon un angle α de 3 à 20°, de préférence de 5 à 15°, et que le contre-bord du levier de pression pour le verrouillage est réalisé avec une face oblique complémentaire (26).
